# EUROPÄISCHE PATENTANMELDUNG

(11) **EP 1 055 476 A2**
(43) Veröffentlichungstag der Anmeldung: **29.11.2000**
(21) Anmeldenummer: 00107801.3
(22) Anmeldetag: 12.04.2000
(51) Int. Cl.: B23D 37/10

(54) **Senkrecht-Innen-Räummaschine**

(30) Priorität: 28.05.1999 DE 19924517
(71) Anmelder: Oswald Forst GmbH & Co. KG, 42659 Solingen (DE)
(72) Erfinder: Berktold, Andreas, Dr., 41460 Neuss (DE); Schröder, Eckard, 42659 Solingen (DE)
(74) Vertreter: Rau, Manfred, Dr. Dipl.-Ing.

(57) **Zusammenfassung**

Eine Senkrecht-Innen-Räummaschine weist einen Ständer (3) auf, dem ein Werkstück-Hebetisch (7) vertikal verschiebbar geführt und mittels eines Hub-Antriebs (10) bewegbar ist. Oberhalb des Hebetisches (7) ist ein vertikal verschiebbar geführter Räumwerkzeug-Zubringerschlitten (15) mit einem ersten Räumwerkzeug-Halter (22) vorgesehen. Unterhalb des Hebetisches (7) ist ein ortsfester zweiter Räumwerkzeug-Halter (23) vorgesehen. Der Zubringerschlitten (15) ist in unterschiedlichen Höhenlagen zur Aufnahme von Räumkräften relativ zum Ständer (3) festsetzbar.

## Beschreibung

Die Erfindung betrifft eine Senkrecht-Innen-Räummaschine nach dem Oberbegriff des Anspruches 1.

Eine derartige aus der DE 196 24 404 A1 bekannte Räummaschine weist einen oberen an der Kopf-Traverse angebrachten Räumwerkzeug-Halter und einen unterhalb des Hebetisches angeordneten Zubringerschlitten auf. Die Maschine wird zum Druck-Räumen eingesetzt, das heißt, bei im oberen Räumwerkzeug-Halter fest eingespanntem Räumwerkzeug wird das auf dem Hebetisch liegende Werkstück nach oben bewegt, wodurch das Räumwerkzeug selber unter Druckkräften steht. Da der Hebetisch in seiner unteren Ausgangsposition sich immer in derselben Lage befinden muß, damit eine Werkstück-Zuführung möglich ist, muß für den Zubringerschlitten unterhalb dieser unteren Ausgangsposition des Hebetisches ein großer Hubbereich für den Zubringerschlitten verfügbar sein, damit eine Anpassung an unterschiedlich lange Werkzeuge möglich ist.

Aus der DE 298 13 875 U1 ist eine Senkrecht-Innen-Räummaschine bekannt, die einen Hebetisch und einen oberhalb des Hebetisches angeordneten Zubringerschlitten aufweist. Am Zubringerschlitten ist ein Räumwerkzeug-Halter angeordnet; unterhalb des Hebetisches ist am Maschinengestell ein weiterer Räumwerkzeughalter angebracht. Der Zubringerschlitten wird über einen Zubringerschlitten-Antrieb vertikal verfahren, der an einer oberen Kopf-Traverse angebracht ist. Der Zubringerschlitten ist auf den insoweit als Führungsstangen dienenden Kolbenstangen der als Hub-Antriebe dienenden Kolben-Zylinder-Antriebe angebracht, die auf der Kopf-Traverse angeordnet sind. Diese Ausgestaltung ist äußerst raumaufwendig und wenig stabil.

Aus der DE 1 292 994 B ist eine Senkrecht-Innen-Räummaschine bekannt, die einen Hebetisch aufweist, der mittels hydraulisch beaufschlagbarer Kolben-Zylinder-Antriebe antreibbar ist. Oberhalb des Hebetisches ist ein Räumwerkzeug-Zubringerschlitten mit einem ersten Räumwerkzeug-Halter angeordnet. Ein zweiter Räumwerkzeug-Halter ist ortsfest unterhalb des Hebetisches angeordnet.

Aus der EP 0 296 069 A1 ist eine Senkrecht-Innen-Räummaschine bekannt, die einen ortsfesten Maschinentisch zur Aufnahme eines Werkstückes aufweist. Ein oberer Räumwerkzeug-Halter ist an einem auf Führungsstangen verschiebbaren Schlitten befestigt. Ein zweiter unterer Räumwerkzeug-Halter ist auf einem unterhalb des Maschinentisches angebrachten, auf den Führungsstangen verschiebbaren Schlitten angebracht. Dieser untere Schlitten wird mittels auf dem Maschinentisch angebrachter, nach unten wirkender Hubantriebe zum Räumen nach unten bewegt. Der obere Schlitten kann mittels Feststelleinrichtungen auf den Führungsstangen festgesetzt werden. Hierdurch ist es möglich, die Räummaschine sowohl zum Druckräumen als auch zum Ziehräumen einzusetzen.

Der Erfindung liegt die Aufgabe zugrunde, eine Räummaschine der gattungsgemäßen Art so auszugestalten, daß auch beim Einsatz von Räumwerkzeugen unterschiedlicher Länge die untere Ausgangsposition des Hebetisches möglichst niedrig ist.

Diese Aufgabe wird erfindungsgemäß durch die Merkmale im Kennzeichnungsteil des Anspruches 1 gelöst. Die erfindungsgemäße Räummaschine ist bevorzugt zum Druckräumen vorgesehen, kann aber auch zum Ziehräumen eingesetzt werden, wobei dann die Räumkräfte durch den zweiten unterhalb des Hebetisches angeordneten Räumwerkzeug-Halter aufgenommen werden. Die Räumkräfte werden gleichmäßig und unabhängig vom Zubringerschlitten-Antrieb in den Ständer eingeleitet. Die Festsetzung des Zubringer-Schlittens kann gemäß einer vorteilhaften Ausgestaltung in unterschiedlichen Höhen erfolgen, so daß eine Anpassung an unterschiedlich lange Werkzeuge möglich ist.

Zahlreiche vorteilhafte Ausgestaltungen ergeben sich aus den Unteransprüchen. Insbesondere lassen sich bei der erfindungsgemäßen Ausgestaltung in besonders einfacher Weise vielfältig Drallantriebe einsetzen.

Weitere Merkmale, Vorteile und Einzelheiten der Erfindung ergeben sich aus der nachfolgenden Beschreibung von Ausführungsbeispielen der Erfindung anhand der Zeichnung. Es zeigt
- Fig. 1: eine Vorderansicht einer ersten Ausführungsform einer Senkrecht-Innen-Räummaschine in teilweise aufgebrochener Darstellung,
- Fig. 2: eine Seitenansicht der Räummaschine nach Fig. 1,
- Fig. 3: eine Draufsicht auf die Räummaschine entsprechend dem Sichtpfeil III-III in Fig. 1 und 2,
- Fig. 4: einen Horizontal-Querschnitt durch die Räummaschine entsprechend der Schnittlinie IV-IV in Fig. 1,
- Fig. 5: eine Seitenansicht der Räummaschine nach Fig. 1 bis 4 in teilweise aufgebrochener Darstellung vor Beginn eines Räumvorganges,
- Fig. 6: die Räummaschine gemäß Fig. 5 zu Beginn eines Räumvorganges,
- Fig. 7: die Räummaschine nach den Fig. 5 und 6 am Ende eines Räumvorganges,
- Fig. 8: die Räummaschine nach den Fig. 5 bis 7 nach dem Herausnehmen eines geräumten Werkstückes,
- Fig. 9: eine Vorderansicht einer zweiten Ausführungsform einer Senkrecht-Innen-Räummaschine in teilweise aufgebrochener Darstellung,
- Fig. 10: die Räummaschine nach Fig. 9 in einer Seitenansicht,
- Fig. 11: eine Vorderansicht einer dritten Ausführungsform einer Senkrecht-Innen-Räummaschine in teilweise aufgebrochener Darstellung,
- Fig. 12: eine Seitenansicht der Räummaschine nach Fig. 11,
- Fig. 13: eine Vorderansicht einer vierten Ausführungsform einer Senkrecht-Innen-Räummaschine in teilweise aufgebrochener Darstellung und
- Fig. 14: eine Seitenansicht der Räummaschine nach Fig. 13.

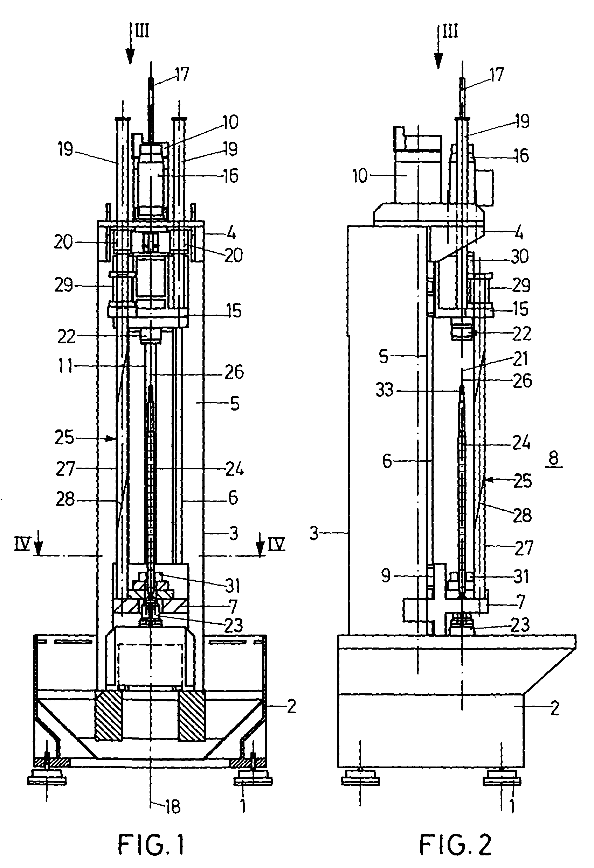

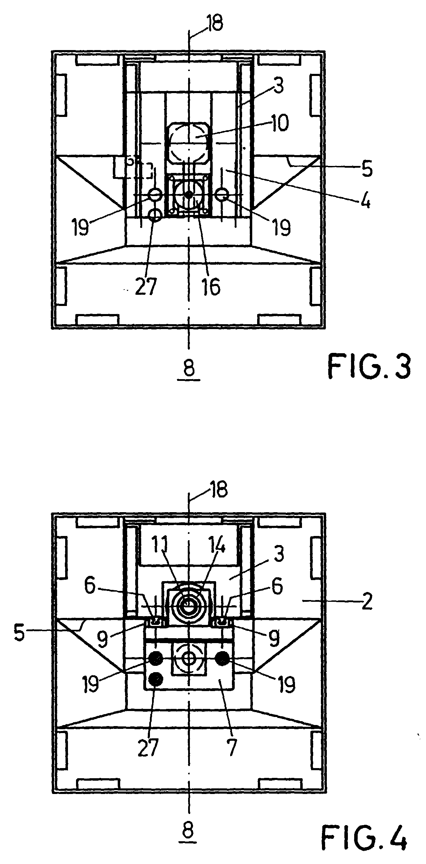

Wie insbesondere aus den Fig. 1 bis 4 hervorgeht, weist eine erfindungsgemäße Senkrecht-Innen-Räummaschine, bei der es sich bevorzugt um eine Druck-Räummaschine handelt, ein über Füße 1 auf einem Fundament abgestütztes Untergestell 2 auf, auf dem ein Ständer 3 angebracht ist, der nach oben über eine Kopf-Traverse 4 abgeschlossen wird. Die Traverse 4 ragt über die Vorderseite 5 des Ständers 3 nach vorn, wie aus Fig. 2 ersichtlich ist. An der Vorderseite 5 des Ständers 3 sind zwei parallel zueinander und vertikal verlaufende als Führungsschienen ausgebildete Führungen 6 angebracht, an denen ein als Räumschlitten dienender Werkstück-Hebetisch vertikal verschiebbar geführt ist. Wie aus Fig. 4 hervorgeht, ist der Hebetisch 7 - von der Bedienungsseite 8 her gesehen - vollständig vor der Vorderseite 5 des Ständers 3 angeordnet und ist mit Schiebelagern 9 auf den Führungen 6 verschiebbar gelagert.

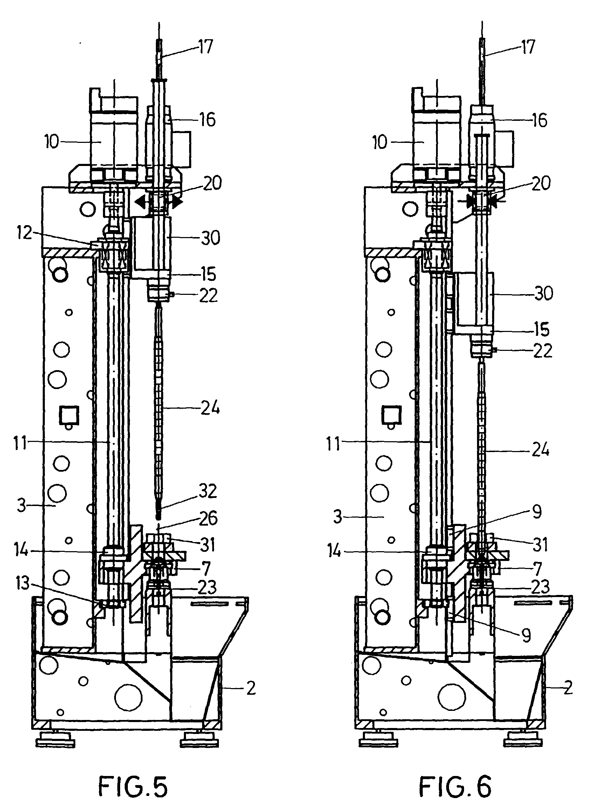

Auf der Traverse 4 ist ein Hub-Antriebsmotor 10 angebracht, der eine vertikal angeordnete Hub-Antriebsspindel 11 antreibt. Die Antriebsspindel 11 ist in ihrer Längsrichtung unverschiebbar, aber drehbar in Lagern 12, 13 gelagert, von denen das obere Lager 12 unmittelbar unterhalb des Antriebsmotors 10 am oberen Ende der Vorderseite 5 des Ständers 3 und das untere Lager 13 unterhalb des Hebetisches 7 am Ständer 3 angebracht ist, wie beispielsweise aus den Fig. 5 und 6 hervorgeht. Auf dem der Vorderseite 5 des Ständers 3 zugewandten rückwärtigen Seite des Hebetisches 7 ist eine Hub-Spindelmutter 14 angebracht, die von der Antriebsspindel 11 durchsetzt wird. Bei einem Drehantrieb der Hub-Antriebsspindel 11 wird demzufolge der Hebetisch 7 nach oben oder unten verfahren.

Oberhalb des Hebetisches 7 und unterhalb der Traverse 4 ist auf den Führungen 6 ein Räumwerkzeug-Zubringerschlitten 15 vertikal verschiebbar gelagert, und zwar in gleicher Weise wie der Hebetisch 7. Auf der Traverse 4 ist ein Zubringerschlitten-Antriebsmotor 16 angebracht, der über eine Spindel 17 mit dem Zubringerschlitten 15 gekoppelt ist und hierüber dessen Zustellbewegungen ausübt. Die Spindel 17 und die Hub-Antriebsspindel 11 sind in einer gemeinsamen vertikalen, sich von der Bedienungsseite 8 hin nach hinten erstreckenden Symmetrie-Ebene 18 angeordnet, wie den Fig. 1, 3 und 4 entnehmbar ist. Am Zubringerschlitten 15 sind zwei sich nach oben durch die Traverse 4 hindurch erstreckende Druckstangen 19 in ihrer Längsrichtung fest angebracht, die jeweils eine Klemmeinrichtuüg 20 durchsetzen, die ebenfalls an der Traverse 4 angebracht sind. Diese Druckstangen 19 sind in einer ebenfalls vertikal aber senkrecht zur Symmetrie-Ebene 18 verlaufenden Kraft-Ebene 21 angeordnet. An dem Zubringerschlitten 15 ist ein oberer Räumwerkzeug-Halter 22 angebracht, bei dem es sich üblicherweise um einen sogenannten Endstück-Halter handelt. Unterhalb des Hebetisches 7 ist ein unterer Räumwerkzeug-Halter 23, bei dem es sich üblicherweise um einen sogenannten Schaft-Halter handelt, angeordnet, der am Untergestell 2 befestigt ist. Die beiden Halter 22, 23 dienen zur Aufnahme eines Räumwerkzeuges 24. Die Halter 22, 23 sind so angebracht, daß das eine oder gegebenenfalls mehrere Räumwerkzeuge 24 in der Kraft-Ebene 21 angeordnet sind. Wenn nur ein Räumwerkzeug 24 vorhanden ist, ist es gleichzeitig in der Symmetrie-Ebene 18 angeordnet; bei Vorhandensein mehrerer Räumwerkzeuge sind diese dann wiederum symmetrisch zur Symmetrie-Ebene 18 angeordnet.

Das Räumwerkzeug 24 ist mittels eines Drallantriebes 25 um seine Achse 26 drehantreibbar, wodurch ein sogenanntes Drallräumen ermöglicht wird. Der Drallantrieb 25 weist bei der Ausführungsform nach den Fig. 1 bis 4 eine vertikal verlaufende Drallstange 27 mit einem Drallgewinde 28 auf, die am Hebetisch 7 fest und undrehbar angebracht ist und die eine auf dem Zubringerschlitten 15 angebrachte, dem Drallgewinde 28 angepaßte Drallmutter 29 durchsetzt. Von der Drallmutter 29 wird eine entsprechende Drehbewegung über ein auf dem Zubringerschlitten 15 angebrachtes Getriebe 30 auf den oberen Räumwerkzeug-Halter 22 übertragen. Der untere Räumwerkzeug-Halter 23 ist entsprechend frei drehbar aber vertikal unverschiebbar am Ständer 3 gelagert.

Die Arbeitsweise beim Druckräumen ergibt sich aus den Fig. 5 bis 8.

In Fig. 5 ist die Ausgangsposition dargestellt, in der im oberen Halter 22 das Räumwerkzeug 24 gehalten ist; der Zubringerschlitten 15 befindet sich in einer hochgefahrenen oberen Position. Die Klemmeinrichtungen 20 für die Druckstangen 19 sind geöffnet, was durch nach außen gerichtete Pfeile angedeutet ist. Auf den Hebetisch 7 ist ein ungeräumtes Werkstück 31 aufgelegt.

Anschließend wird - entsprechend der Darstellung in Fig. 6 - durch entsprechende Betätigung des Zubringerschlitten-Antriebsmotors 16 der Zubringerschlitten 15 in seine untere Position gebracht, wobei das Räumwerkzeug 24 mit seinem unteren Ende 32, seinem Schaft, das Werkstück 31 durchdringt und, im unteren Räumwerkzeug-Halter 23 fest eingespannt wird. Die Klemmeinrichtungen 20 werden in dieser Position geschlossen, was durch nach innen gerichtete Pfeile angedeutet ist, so daß der Zubringerschlitten 15 in seiner unteren Position, seiner Räumposition, mit dem Ständer 3 verriegelt ist. Das obere Ende 33 des Räumwerkzeuges 24, das Endstück, ist hierbei im oberen Halter 22 fest eingespannt.

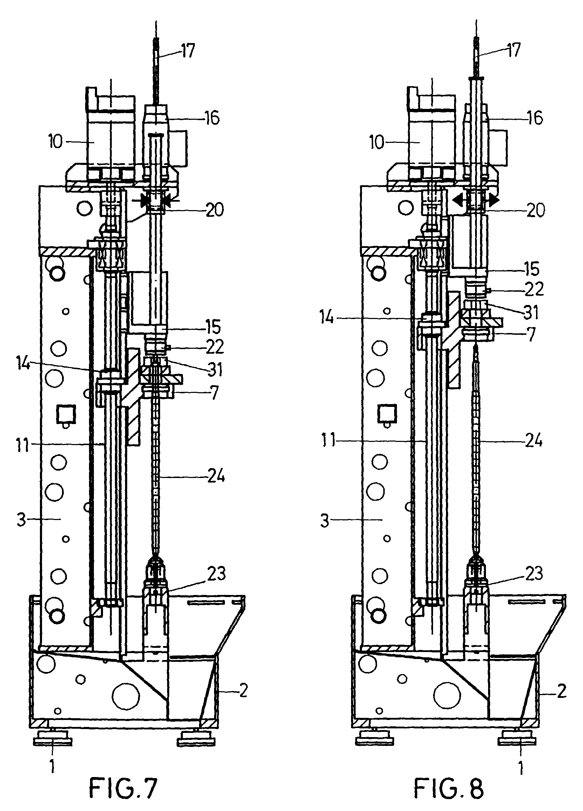

Nunmehr wird - entsprechend der Darstellung in Fig. 7 - durch entsprechenden Antrieb des Hub-Antriebsmotors 10 der Hebetisch 7 zusammen mit dem Werkstück 31 unter Ausführung des entsprechenden Räumvorganges in seine obere Zwischen-Position verfahren. Über den Drallantrieb 25 wird hierbei eine dem Verlauf des Drallgewindes 28 entsprechende Drehbewegungen des Räumwerkzeuges 24 ausgeübt; es erfolgt ein Drall-Räumvorgang. Nach der Beendigung des Räumvorganges werden zum einen die Klemmeinrichtungen 20 und zum anderen der obere Räumwerkzeug-Halter 22 geöffnet und der Zubringerschlitten 15 durch entsprechenden Antrieb des Antriebsmotors 16 in eine oberste Stellung gemäß Fig. 8 verfahren. Des weiteren wird der Hub-Antriebsmotor 10 erneut betätigt und der Hebetisch 7 nach oben in eine obere Position verfahren, in der das auf dem Hebetisch 7 liegende, fertig geräumte Werkstück 31 frei vom oberen Ende 33 des Räumwerkzeuges 24 ist, so daß es vom Hebetisch 7 entnommen werden kann. Das Räumwerkzeug 24 wird in dieser Position ausschließlich im unteren Halter 23 gehalten.

Anschließend wird der Hebetisch 7 wieder in seine untere in Fig. 5 dargestellte Ausgangs-Position verfahren. Der Zubringerschlitten 15 wird in die in Fig. 6 dargestellte untere Position verfahren, in der das obere Ende 33 des Räumwerkzeuges 24 vom oberen Räumwerkzeug-Halter 22 ergriffen wird. Gleichzeitig wird der untere Halter 23 geöffnet. Dann fährt - immer bei geöffneten Klemmeinrichtungen 20 - der Zubringerschlitten 15 wieder in die obere - in Fig. 5 dargestellte - Position. Nach Einlegen eines neuen zu räumenden Werkstückes 31 auf den Hebetisch 7 kann der Räumvorgang erneut beginnen.

Ein Ziehräumen erfolgt in einer Ausgangsposition gemäß den Fig. 1 und 2.

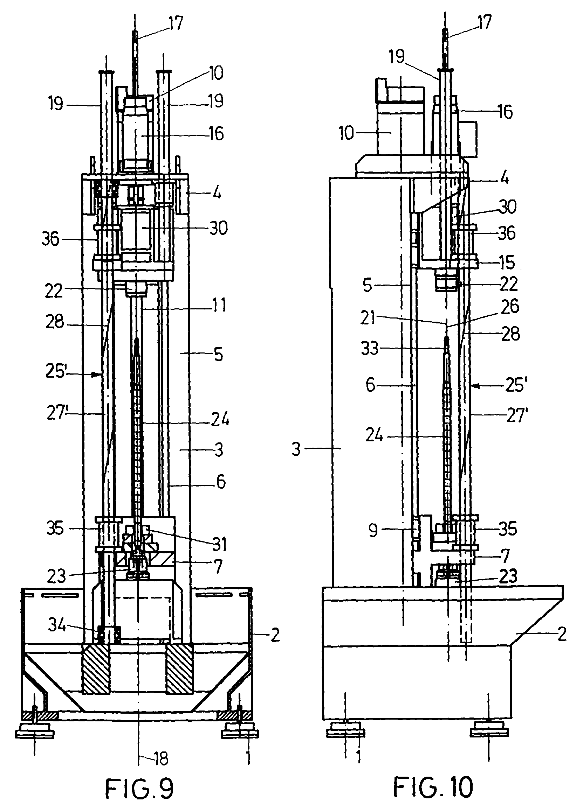

Die Ausführungsform nach den Fig. 9 und 10 unterscheidet sich nur durch einen anders ausgestalteten Drallantrieb 25'. Hierbei ist eine Drallstange 27' mit ihrem unteren Ende frei drehbar aber in ihrer Längsrichtung unverschiebbar in einem Lager 34 gelagert, das unterhalb des Hebetisches 7 am Untergestell 2 angebracht ist. Die Drallstange 27' durchsetzt den Hebetisch 7 und eine auf diesem undrehbar angebrachte Drall-Antriebsmutter 35, die bei einer vertikalen Verschiebebewegung des Hebetisches 7 die Drallstange entsprechend ihrem Drallgewinde 28 in Drehungen versetzt. Die Drehbewegung wird auf dem Zubringerschlitten über ein drehfest mit der Drallstange 27' verschiebbares Zahnrad 36 abgegriffen und über ein Getriebe 30 auf den oberen Räumwerkzeug-Halter 22 übertragen.

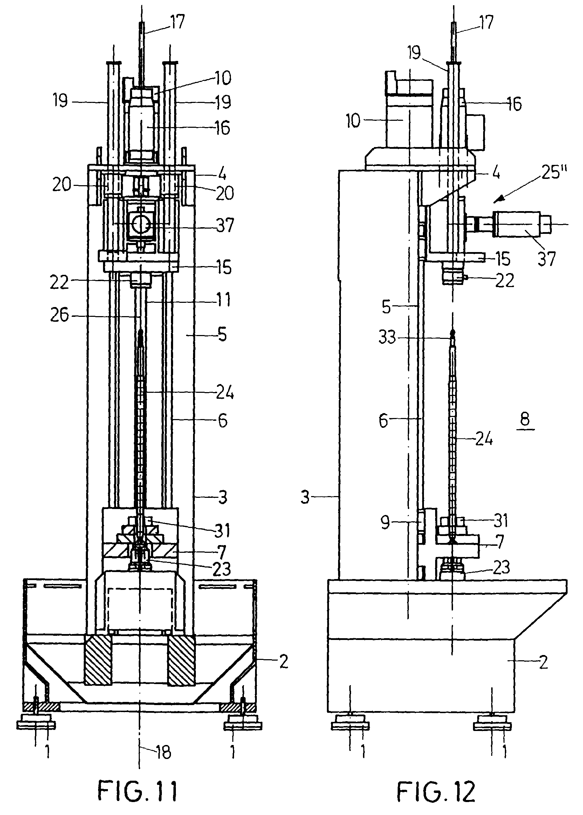

Die Ausführungsform nach den Fig. 11 und 12 unterscheidet sich von der nach den Fig. 1 bis 8 nur dadurch, daß der Drallantrieb 25'' für das Räumwerkzeug 24 im wesentlichen nur noch einen am Zubringerschlitten angebrachten Drall-Antriebsmotor 37 aufweist, der direkt den oberen Räumwerkzeug-Halter 22 drehantreibt. In diesem Fall bedarf es einer Synchronisation von Drall-Antriebsmotor 37 und Hub-Antriebsmotor 10 während des Räumvorganges über die Steuerung.

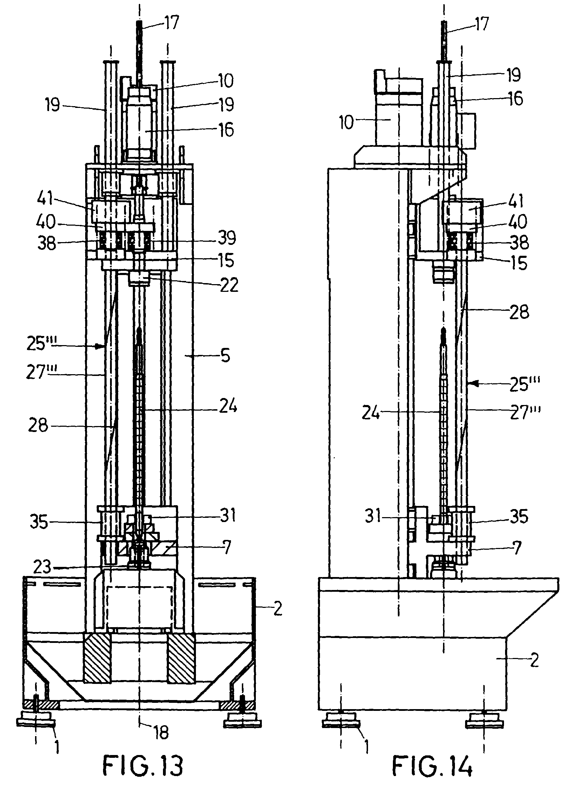

Die Ausführungsform nach den Fig. 13 und 14 unterscheidet sich von der nach den Fig. 9 und 10 durch die Ausgestaltung des Drallantriebes 25'''. Bezüglich aller weiteren Einzelheiten wird auf die obigen Beschreibungen verwiesen. Die Ausführungsform nach den Fig. 13 und 14 unterscheidet sich dadurch, daß die Drallstange 27''' nicht in einem unteren Lager drehbar gelagert ist, das am Werkstück-Hebetisch 7 angebracht ist; sie ragt vielmehr frei nach unten durch den Hebetisch 7 hindurch. Am Werkstück-Hebetisch 7 ist undrehbar eine Drall-Antriebsmutter 35 angebracht, mittels derer bei Hubbewegungen des Werkstück-Hebetisches 7 die Drallstange 27''' gedreht wird. Sie ist in ihrem oberen Bereich in einem oberen Lager 38 frei drehbar aber axial fest gelagert, das am Zubringerschlitten 15 angeordnet ist. Benachbart hierzu ist am Zubringerschlitten 15 ein Drehlager 39 für den oberen Räumwerkzeug-Halter 22 vorgesehen. Die Drallstange 27''' ist mit dem oberen Räumwerkzeug-Halter 22 über ein Zahnrad-Schaltgetriebe 40 verbunden. Mittels einer Schaltkupplung 41 kann die drehfeste Kopplung zwischen Drallstange 27''' und oberem Räumwerkzeug-Halter 22 geöffnet oder geschlossen werden. Hierdurch ist es möglich, die drehfeste Verbindung zwischen Drallstange 27''' und oberem Räumwerkzeug-Halter 22 nur während eines Räumhubes herzustellen. Der Grund liegt darin, daß bei den oben geschilderten Zustellbewegungen des Zubringerschlittens 15 die Drallstange 27''' sich aufgrund der Relativbewegungen zum Hebetisch 7 drehen würde und somit auch den oberen Räumwerkzeug-Halter 22 drehen würde. Um dies zu verhindern, wird die Dreh-Verbindung zwischen der Drallstange 27''' und dem oberen Räumwerkzeug-Halter 22 während dieser Bewegungen des Zubringerschlittens 15 unterbrochen.

## Patentansprüche

1. Senkrecht-Innen-Räummaschine mit
- einem Ständer (3),
- einer auf dem Ständer (3) angebrachten oberen Kopf-Traverse (4),
- einem am Ständer (3) vertikal verschiebbar geführten Werkstück-Hebetisch (7),
- einem Hub-Antrieb für den Hebetisch (7),
- einem vertikal verschiebbar geführten Räumwerkzeug-Zubringerschlitten (15) mit mindestens einem ersten Räumwerkzeug-Halter (22),
- mindestens einem ortsfest angeordneten zweiten Räumwerkzeug-Halter (23) und
- mindestens einem Zubringerschlitten-Antrieb,
**dadurch gekennzeichnet,**
**daß** der ortsfeste zweite Räumwerkzeug-Halter (23) unterhalb des Hebetisches (7) vorgesehen ist,
**daß** der Zubringerschlitten (15) oberhalb des Hebetisches (7) angeordnet ist und
**daß** der Zubringerschlitten (15) zur Aufnahme von Räumkräften in unterschiedlichen Höhenlagen relativ zum Ständer (3) festsetzbar ist.

2. Senkrecht-Innen-Räummaschine nach Anspruch 1, **dadurch gekennzeichnet,**
**daß** der Zubringerschlitten-Antrieb an der Kopf-Traverse (4) angeordnet ist.

3. Senkrecht-Innen-Räummaschine nach Anspruch 2, **dadurch gekennzeichnet,**
**daß** der Zubringerschlitten-Antrieb durch mindestens einen auf der Kopf -Traverse (4) angeordneten Zubringerschlitten-Antriebsmotor (16) und eine diesen mit dem Zubringerschlitten (15) verbindende Spindel (17) gebildet ist.

4. Senkrecht-Innen-Räummaschine nach Anspruch 1, **dadurch gekennzeichnet,**
**daß** der Zubringerschlitten (15) mit mindestens einer parallel zur Verschieberichtung des Zubringerschlittens (15) verlaufenden Druckstange (19) versehen ist, die mittels einer lösbaren Klemmeinrichtung (20) relativ zum Ständer (3) festsetzbar ist.

5. Senkrecht-Innen-Räummaschine nach Anspruch 4, **dadurch gekennzeichnet,**
**daß** die mindestens eine Druckstange (19) zur Kopf-Traverse (4) ragt und
**daß** die Druckstange (19) durch die mit der Kopf-Traverse (4) verbundene Klemmeinrichtung (20) geführt ist.

6. Senkrecht-Innen-Räummaschine nach Anspruch 4 oder 5, **dadurch gekennzeichnet,**
**daß** zwei in einer gemeinsamen Ebene liegende Druckstangen (19) vorgesehen sind.

7. Senkrecht-Innen-Räummaschine nach einem der Ansprüche 1 bis 6, **dadurch gekennzeichnet,**
**daß** der Hub-Antrieb durch einen am oberen Ende des Ständers (3) angeordneten und mit dem Hebetisch (7) über nur eine Hub-Antriebsspindel (11) verbundenen Hub-Antriebsmotor (10) gebildet ist.

8. Senkrecht-Innen-Räummaschine nach Anspruch 7, **dadurch gekennzeichnet,**
**daß** die Hub-Antriebsspindel (11) in einer sich von der Bedienungsseite (8) nach hinten erstreckenden Symmetrie-Ebene (18) angeordnet ist.

9. Senkrecht-Innen-Räummaschine nach einem der Ansprüche 1 bis 8, **dadurch gekennzeichnet,**
**daß** der Hebetisch (7) mit seiner Rückseite an an der Vorderseite (5) des Ständers (3) angebrachten Führungen (6) verschiebbar geführt ist.

10. Senkrecht-Innen-Räummaschine nach Anspruch 9, **dadurch gekennzeichnet,**
**daß** der Zubringerschlitten (15) auf den Führungen (6) verschiebbar geführt ist.

11. Senkrecht-Innen-Räummaschine nach den Ansprüchen 3 und 8, **dadurch gekennzeichnet,**
**daß** die Spindel (17) des Zubringerschlitten-Antriebsmotors (16) in der Symmetrie-Ebene (18) angeordnet ist.

12. Senkrecht-Innen-Räummaschine nach Anspruch 1 und 4, **dadurch gekennzeichnet,**
**daß** die Räumwerkzeug-Halter (22, 23) und die mindestens eine Druckstange (19) in einer gemeinsamen vertikalen Kraft-Ebene (21) angeordnet sind.

13. Senkrecht-Innen-Räummaschine nach einem der Ansprüche 1 bis 12, **dadurch gekennzeichnet,**
**daß** der am Zubringerschlitten (15) angebrachte erste Räumwerkzeug-Halter (22) mittels eines Drallantriebes (25, 25', 25'') drehantreibbar ist und
**daß** das Räumwerkzeug (24) derart im zweiten Räumwerkzeug-Halter (23) gelagert ist, daß es um seine Achse (26) drehbar ist.

14. Senkrecht-Innen-Räummaschine nach Anspruch 13, **dadurch gekennzeichnet,**
**daß** der Drallantrieb (25) eine in ihrer Längsrichtung fest und undrehbar am Hebetisch (7) angebrachte, mit einem Drallgewinde (28) versehene Drallstange (27) aufweist, die eine drehbar am Zubringerschlitten (15) angebrachte Drallmutter (29) durchsetzt, die wiederum mit dem ersten Räumwerkzeug-Halter (22) in Drehverbindung gekoppelt ist.

15. Senkrecht-Innen-Räummaschine nach Anspruch 13, **dadurch gekennzeichnet,**
**daß** der Drallantrieb (25', 25''') eine drehbar am Ständer (3) gelagerte Drallstange (27', 27''') aufweist, die eine undrehbar am Hebetisch (7) angebrachte Drallmutter (29) durchsetzt
und mit dem ersten Räumwerkzeug-Halter (22) in Drehverbindung gekoppelt ist.

16. Senkrecht-Innen-Räummaschine nach Anspruch 15, **dadurch gekennzeichnet,**
**daß** die Drehverbindung zwischen der Drallstange (27''') und dem ersten Räumwerkzeug-Halter (22) lösbar ist.

17. Senkrecht-Innen-Räummaschine nach Anspruch 13, **dadurch gekennzeichnet,**
**daß** der Drallantrieb (25'') einen am Zubringerschlitten (15) angeordneten Drall-Antriebsmotor (37) aufweist.

18. Senkrecht-Innen-Räummaschine nach Anspruch 15, **dadurch gekennzeichnet,**
**daß** die Drallstange (27''') am Zubringer-Schlitten (15) axial abgestützt ist.
